# EUROPEAN PATENT SPECIFICATION

(11) **EP 1 737 716 B1**
(45) Date of publication and mention of the grant of the patent: **15.11.2017**
(21) Application number: 04723530.4
(22) Date of filing: 26.03.2004
(51) Int. Cl.: B61F 5/26, B61F 5/30

(54) **MOUNTING OF THE PRIMARY SUSPENSION IN A RAILWAY BOGIE**
BEFESTIGUNG DER PRIMÄRFEDERUNG IN EINEM DREHGESTELL EINES EISENBAHNFAHRZEUGS
MONTAGE DE LA SUSPENSION PRIMAIRE DANS UN BOGIE FERROVIAIRE

(43) Date of publication of application: 03.01.2007
(73) Proprietor: AB SKF, 415 50 Göteborg (SE); ContiTech Luftfedersysteme GmbH, 30165 Hannover (DE)
(72) Inventor: GEDENK, Volker, 30966 Hemmingen (DE); MENTENIER, Gilles, 91440 Bures Sur Yvette (FR); SKILLER, John, 3766 AK Soest (NL)
(74) Representative: Kohl, Thomas
(86) International application number: PCT/EP2004/003199
(87) International publication number: WO 2005/092686

(56) References cited:
- DE-B- 1 230 834
- GB-A- 874 728
- US-A- 3 920 231

## Description

The invention relates to an adapter arrangement of a railway bogie comprising at least two spring units per one wheel and a bogie frame.

From UIC standard a bogie with helical springs is well known, whereby the axlebox suspension consists of helical springs in combination with friction damping. Thereby the springs rest on support arms integral with the lower part of the axlebox housing and are connected with the bogie frame using caps integral with the bogie frame for taking up the top of the springs.

US 2002-0089102 A1 discloses a hydraulic spring comprising a membrane. Therein it is also disclosed that said hydraulic spring is for use in rail vehicles especially as a primary spring.

GB 874 728 discloses a rubber spring suspension for railway, whereby the two rubber springs belonging to one of the railway wheels are connected to a top sill which is secured to the railway vehicle chassis or frame via a screwing connection.

Further the catalogue of the company ContiTech Luftfedersysteme GmbH in Hannover, Germany, "Air Spring Systems for Modern Rail Vehicles", printed and distributed in October 1998 discloses the use of hydraulic springs comprising a membrane in two-axle bogies.

One object of the present invention is to provide an improved adapter arrangement of a railway bogie comprising at least two spring units per one wheel and a bogie frame, so that various types of spring units in connection with also various types of axleboxes having all diverse dimensions can be connected to the bogie frame having standardized dimensions in an easy and reliable manner.

The object of the invention is achieved by the subject of claim 1. Preferable embodiments are described in the dependent claims.

According to claim 1 the adapter arrangement comprises two hydraulic spring units having parallel principal axes and a single piece adapter which bridges said two spring units and which is arrangeable between said bogie frame on the one side and said two hydraulic spring units on the other side, whereby said two hydraulic spring units are attached to the adapter with a prescribed distance between the principal axes.

So the adapter is used in an advantageous manner to adapt various types of hydraulic spring units in connection with various types of axleboxes having all diverse dimensions to the bogie frame having standardized dimensions without the need of modifying the bogie frame. Just the adapter is modified according to the used type of hydraulic spring units and axlebox, whereby any modifying of the adapter can be done more easily and in a more cost-efficient way than it could be done with the bogie frame itself.

With the accurately pre-fabricatable adapter it can further be assured that the two hydraulic spring units are mounted to the bogie frame exactly with a prescribed distance between the principal axes of the two hydraulic spring units, whereby every deviation from said prescribed distance would result in a tangential deviation of the hydraulic spring units and therewith in an undesirable modification of the spring characteristic.

Further advantages, features and details of the invention are described with respect to one preferred embodiment of the invention with reference to the drawings wherein:
- Figure 1: is a longitudinal cross section in the region of one wheel of a bogie and
- Figure 2: is a sectional view along the line BB of Figure 1.

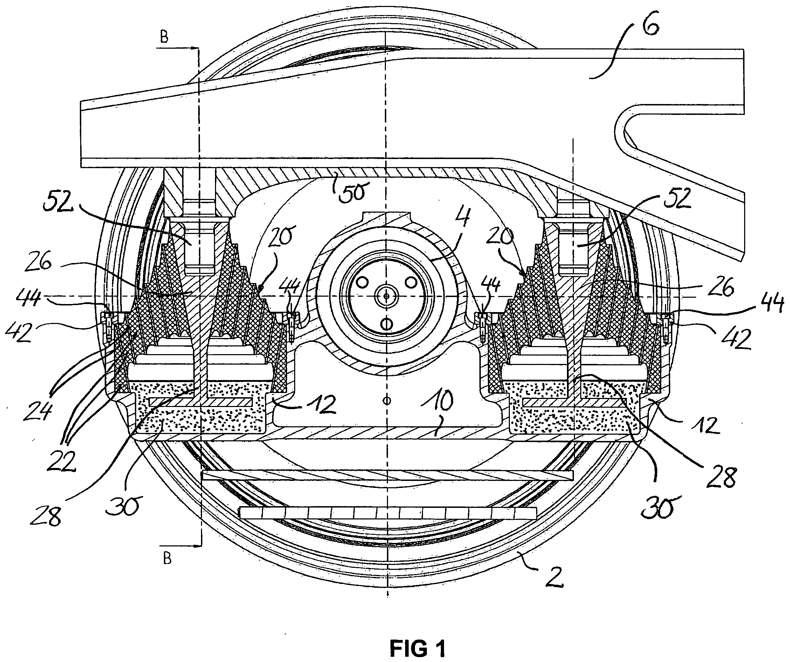

Figure 1 shows a longitudinal cross section in the region of one wheel 2 of a bogie of the so-called Y 25 type, whereby the cut is directed according to a plane being defined by the axes of rotational symmetry of a first and second hydraulic spring. The pictured section of the bogie comprises an axlebox 10 with a rolling bearing 4 mounted in a middle region of the axlebox 10. The rolling bearing 4 supports one end of one of the two axles of the bogie.

A base of the axlebox 10 is extended to the left and the right side forming a cup shaped region 12 at each of said sides. Each of said hydraulic springs comprises a spring element 20, which is attached to each of said cup shaped regions 12 of the axlebox 10. A metallic centrepiece 26 is located in the centre of each of the spring elements 20.

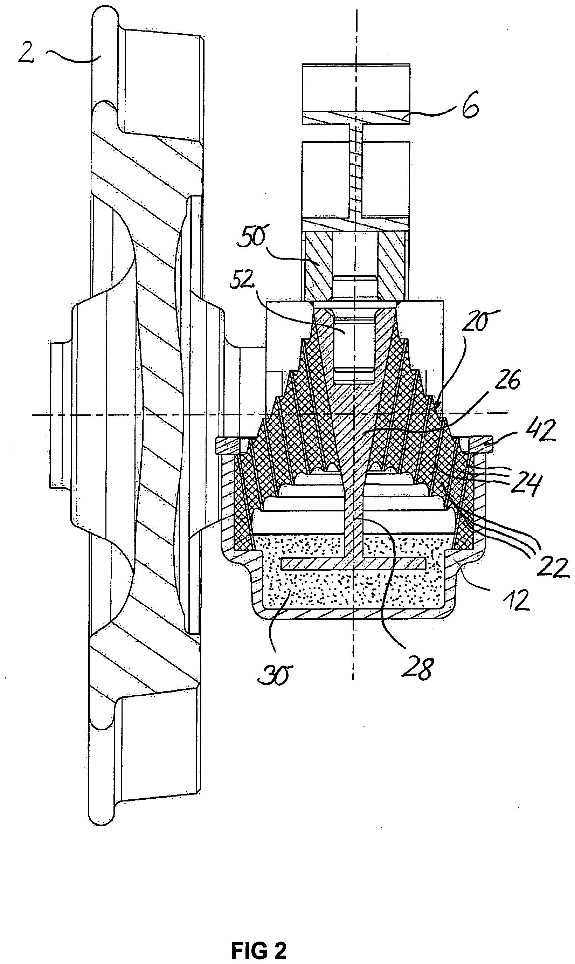

These two centrepieces 26 are attached to one bridging adapter 50. Therefore the centrepieces 26 and the bridging adapter 50 have bores for connecting the centrepieces 26 with the bridging adapter 50 via two bolts 52 pictured uncut in Figure 1 and 2. In other embodiments the bolts 52 can be integral parts of the centrepieces 26 or of the bridging adapter 50 or the centrepieces 26 can be connected to the bridging adapter 50 by any other connecting means.

The bridging adapter 50 is attached to a longeron of a frame 6 of the bogie, whereby this longeron extends in a longitudinal direction parallel to the rails and is pictured uncut in Figure 1. Preferably the bridging adapter 50 is connected to the bogie frame 6 by welding.

In the following just that left cup shaped region 12 in connection with the left spring element 20 is described in detail, because the same applies to the right cup shaped region 12 in connection with the right spring element 20. Therefore Figure 2 shows a sectional view along the line BB of Figure 1. The spring element 20 comprises sleeve shaped elastomeric elements 22 and intermediate sleeve shaped metallic elements 24 in an alternating succession, whereby the elastomeric and the metallic elements 22 and 24 are connected by way of vulcanisation. Also the centrepiece 26 is connected by way of vulcanisation to its adjacent elastomeric element 22.

The spring element 20 is secured to the respective cup shaped region 12 of the axlebox 10 via a sealing ring 42, which is attached to the axlebox 10 via screws 44. In other embodiments the spring element 20 also can be directly vulcanised to the cup shaped region 12. The spring elements 20 forms together with the respective cup shaped region 12 of the axlebox 10 a volume for a fluid 30 particularly a hydraulic fluid. This volume is at least partly filled with the fluid 30. The centrepiece 26 is prolonged into said volume forming a plunger shaped region 28. Thereby at least a disk shaped region at the end of the plunger shaped region 28 is dipped into the fluid 30, so that this arrangement fulfils the function of a damper. So the cup shaped region 12 of the axlebox 10 together with the respective spring element 20 and the fluid 30 form together the hydraulic spring.

In another embodiment of the invention a hydraulic spring can be used, e.g. according to the already cited US 2002-0089102 A1, comprising a membrane instead of the plunger shaped section 28 of the centrepiece 26, whereby the cup shaped region 12 of the axlebox 10 is then also one part of the housing of the hydraulic spring.

### List of reference signs

- 2: wheel
- 4: rolling bearing
- 6: bogie frame

- 10: axlebox
- 12: cup shaped region

- 20: spring element
- 22: elastomeric element
- 24: metallic element
- 26: centrepiece
- 28: plunger shaped region

- 30: fluid

- 42: sealing ring
- 44: screw

- 50: bridging adapter
- 52: bolt

## Claims

1. Adapter arrangement of a railway bogie comprising at least two spring units (20) per one wheel (2) and a bogie frame (6), whereby the adapter arrangement comprises two of the aforesaid at least two spring units (20) and a single piece adapter (50) which bridges said two spring units (20) and which is arrangeable between said bogie frame (6) on the one side and said two spring units (20) on the other side, a spring unit (20) being securable to the respective cup shaped region (12) of an axlebox (10), **characterized in that** said two spring units (20) are of the hydraulic type, said two hydraulic spring units (20) have parallel principal axes, and said two hydraulic spring units (20) are attached to the adapter (50) with a prescribed distance between the principal axes.

2. Adapter arrangement of claim 1, whereby said bogie is of the Y 25 type.

3. Adapter arrangement of one of the claims 1 or 2, whereby said adapter (50) is attached to said bogie frame (6) especially by welding.

4. Adapter arrangement of one of the claims 1 to 3, whereby said adapter (50) is connected to at least one of said hydraulic spring units (20) via at least one bolt (52).

5. Adapter arrangement of claim 4, whereby said bolt (52) is an integral part of said adapter (50) or said hydraulic spring unit (20).

6. Adapter arrangement of one of the claims 1 to 5, whereby said adapter (50) is designed to fit to said bogie frame (6) having standardized dimensions.

7. Adapter arrangement of one of the claims 1 to 6, whereby said adapter (50) has an essentially rectangular cross section.

8. Adapter arrangement of one of the claims 1 to 7, whereby said adapter (50) extends oblong in a direction in which said adapter (50) bridges said hydraulic spring units (20).

## Patentansprüche

1. Adapteranordnung eines Drehgestells eines Eisenbahnfahrzeugs, die wenigstens zwei Federeinheiten (20) pro Rad (2) und einen Drehgestellrahmen (6) umfasst, wobei die Adapteranordnung zwei der vorgenannten wenigstens zwei Federeinheiten (20) und einen einstückigen Adapter (50) umfasst, der die zwei Federeinheiten (20) überbrückt und der zwischen dem Drehgestellrahmen (6) auf der einen Seite und den zwei Federeinheiten (20) auf der anderen Seite angeordnet werden kann, wobei eine Federeinheit (20) an dem entsprechenden becherförmigen Bereich (12) des Achslagers (10) befestigt werden kann,
**dadurch gekennzeichnet, dass** die zwei Federeinheiten (20) hydraulischer Art sind, wobei die zwei hydraulischen Federeinheiten (20) parallele Hauptachsen aufweisen und wobei die zwei hydraulischen Federeinheiten (20) mit einem vorgeschriebenen Abstand zwischen den Hauptachsen an dem Adapter (50) angebracht sind.

2. Adapteranordnung nach Anspruch 1, wobei das Drehgestell von der Bauart Y 25 ist.

3. Adapteranordnung nach einem der Ansprüche 1 oder 2, wobei der Adapter (50) insbesondere durch Schweißen an dem Drehgestellrahmen (6) angebracht ist.

4. Adapteranordnung nach einem der Ansprüche 1 bis 3, wobei der Adapter (50) über wenigstens eine Schraube (52) mit wenigstens einer der hydraulischen Federeinheiten (20) verbunden ist.

5. Adapteranordnung nach Anspruch 4, wobei die Schraube (52) ein integraler Bestandteil des Adapters (50) oder der hydraulischen Federeinheit (20) ist.

6. Adapteranordnung nach einem der Ansprüche 1 bis 5, wobei der Adapter (50) so ausgelegt ist, dass er zu dem Standardabmessungen aufweisenden Drehgestellrahmen (6) passt.

7. Adapteranordnung nach einem der Ansprüche 1 bis 6, wobei der Adapter (50) einen im Wesentlichen rechteckigen Querschnitt aufweist.

8. Adapteranordnung nach einem der Ansprüche 1 bis 7, wobei sich der Adapter (50) längs in einer Richtung erstreckt, in der der Adapter (50) die hydraulischen Federeinheiten (20) überbrückt.

## Revendications

1. Agencement d'adaptateur d'un bogie ferroviaire comprenant au moins deux unités de ressort (20) par roue (2) et un châssis (6) de bogie, dans lequel l'agencement d'adaptateur comprend deux desdites unités de ressort (20) précitées et un adaptateur (50) d'une seule pièce qui enjambe l'espace entre lesdites deux unités de ressort (20) et qui peut être disposé entre ledit châssis (6) de bogie d'une part et lesdites deux unités de ressort (20) d'autre part, une unité de ressort (20) pouvant être solidement fixée à la zone (12) en forme de tasse correspondante d'une boîte (10) d'essieu,
**caractérisé en ce que** lesdites deux unités de ressort (20) sont de type hydraulique, lesdites deux unités de ressort (20) hydrauliques ont des axes principaux parallèles, et lesdites deux unités de ressort (20) hydrauliques sont fixées à l'adaptateur (50) avec une distance prescrite entre les axes principaux.

2. Agencement d'adaptateur selon la revendication 1, dans lequel ledit bogie est du type Y 25.

3. Agencement d'adaptateur selon la revendication 1 ou 2, dans lequel ledit adaptateur (50) est fixé audit châssis (6) de bogie, particulièrement par soudage.

4. Agencement d'adaptateur selon l'une quelconque des revendications 1 à 3, dans lequel ledit adaptateur (50) est raccordé à au moins une desdites unités de ressort (20) hydrauliques par le biais d'au moins un boulon (52).

5. Agencement d'adaptateur selon la revendication 4, dans lequel ledit boulon (52) fait partie intégrante dudit adaptateur (50) ou de ladite unité de ressort (20) hydraulique.

6. Agencement d'adaptateur selon l'une quelconque des revendications 1 à 5, dans lequel ledit adaptateur (50) est conçu pour aller avec ledit châssis (6) de bogie ayant des dimensions standardisées.

7. Agencement d'adaptateur selon l'une quelconque des revendications 1 à 6, dans lequel ledit adaptateur (50) a une section transversale pour l'essentiel rectangulaire.

8. Agencement d'adaptateur selon l'une quelconque des revendications 1 à 7, dans lequel ledit adaptateur (50) s'étend en longueur dans la direction dans laquelle ledit adaptateur (50) enjambe l'espace entre lesdites unités de ressort (20) hydrauliques.
